# EUROPEAN PATENT APPLICATION

(11) **EP 2 472 730 A1**
(43) Date of publication of application: **04.07.2012**
(21) Application number: 10306527.2
(22) Date of filing: 28.12.2010
(51) Int. Cl.: H04B 1/38

(54) **Contactless adaptor device**

(71) Applicant: Gemalto SA, 92190 Meudon (FR)
(72) Inventor: Brun, Alain, 92197, MEUDON CEDEX (FR); Foesser, Christophe, 92197, MEUDON CEDEX (FR)
(74) Representative: Cour, Pierre

(57) **Abstract**

The invention provides a contactless adaptor device 1 comprising a printed circuit board having two opposite sides which supports:
- a main part 4 having a flexible electromagnetic antenna 3 printed on a conductive layer,
• a connector part 2 having the dimensions of a second generation form factor of SIM card comprising a smartcard connector according ISO 7816 standard, having a plurality of contacts areas, printed on the two sides of the printed circuit board and having an electric contact between the two sides of the printed circuit board,
• a compartment 20 having the dimensions to receive a third generation form factor of SIM card,
• an integrated circuit 5 adjacent to said compartment 20, having a plurality of pads for connecting, on one hand, the antenna turns 3, and on the other hand, several contacts areas of the smartcard connector 2.

## Description

The present invention relates to a contactless adaptor device. More particularly, the invention relates to an adaptor device for enabling a near-field communication with a SIM card with mobile phones without such a communication channel.

Near-field communication relates to communication using electromagnetic field in very short distance. As an example, ISO 14443 is a standard that defines some Near-Field Communication (NFC) between a smartcard and a reader. NFC is commonly used for physical access to buildings or to transportation network and also for payment.

Today, users and manufacturers want to reduce the number of smartcards by using multi-application cards. This reduction also enables to enlarge the numbers of services that may be provided by the card provider. In addition, mobile phone operators want to include some payment means in the mobile phones supported by the SIM card which is secured like a banking card. The basic idea consists in using the phone for small payment operations and/or for accessing for example a transportation network.

For this purpose, the European Telecommunication Standard Institute (ETSI) has adopted to include a contactless interface of a NFC type into the mobile phone for communicating with the Subscriber Identity Module (SIM) card by means of a Single Wire Protocol (SWP). The NFC interface of the phone can be used even if the mobile phone is powered off. For implementing the service, it is necessary to have an adapted smartcard together with an adapted mobile phone.

On the smartcard side, an additional communication interface has to be supported, which is already done for several smartcard chips and all the mobile phone operators can be now supplied with the corresponding smartcards.

However, on the mobile phone side, most of mobile phones on the field do not include NFC interface, a final user needs to change his mobile if he wants to implement the NFC services. This represents an over-cost for the final user which may delay the full deployment of these new services. In addition, not all handset manufacturers will change all their models at a same time. It is also possible that most of low-end handset will never include the NFC and SWP interfaces for cost reason. These are reasons that might delay the spread out of NFC based services with SIM card.

Therefore, there is a need to find a solution for accelerating the deployment of NFC compatible mobile phones while reducing the cost of re-equipment with a NFC interface of existing mobile handsets.

It is known to provide a contactless adaptor device to be inserted inside the handset and connected to the SIM card for replacing the NFC interface of the handset. With such adaptor, any handset can be used with a smartcard supporting SWP for enabling NFC services.

However, such contactless adaptor device have sometimes flexibility and thickness problems with regards to the localization of the integrate circuit needed to translate messages between the wireless standard and the single wire protocol standard. In addition, a contactless adaptor device that is too thick can put some mechanical stress on the battery or on the cover of the mobile device.

One goal of the invention is to provide an adaptor device functioning with less mechanical stress to the mobile device and having a good flexibility.

More particularly, the invention is a contactless adaptor device comprising a printed circuit board having two opposite sides which supports:
- a main part having a flexible electromagnetic antenna constituted of conductive turns printed on a conductive layer,
- a connector part having a smartcard connector according ISO 7816 standard, said smartcard connector having a plurality of contacts areas, said smartcard connector being printed on the two sides of the printed circuit board and having an electric contact between the two sides of the printed circuit board, said connector part having the dimensions of a second generation form factor of SIM card,
   said connector part presenting a compartment having the dimensions to receive a SIM card having a third generation form factor and where an integrated circuit, having a plurality of pads for connecting, on one hand, the antenna turns, and on the other hand, several contacts areas of the smartcard connector, is integrated within the connector part, adjacent to said compartment.

According to an aspect of the invention, when the third generation form factor smartcard is placed in the compartment, the thickness of the smartcard connector part is the thickness of a second generation smartcard.

According to another aspect of the invention, the third generation form factor smartcard is a thinner third generation form factor smartcard.

According to another aspect of the invention, the integrate circuit is glued in a compartment on the connector part.

According to another aspect of the invention, the several contacts areas of the smartcard comprise power supply contacts for receiving energy or for providing energy to the smartcard.

According to another aspect of the invention, one of the functions of the integrated circuit is to translate messages between a wireless standard and a single wire protocol standard.

According to another aspect of the invention, the wireless standard is ISO 14443 standard.

According to another aspect of the invention, the single wire protocol standard is ETSI TS 102 613.

According to another aspect of the invention, the flexible printed circuit board is bendable and foldable to fit into a mobile phone having its connector part inserted between the handset and a smart card having a function of subscriber identity module.

According to another aspect of the invention, the plurality of pads for connecting the smart card connector comprises three electrical lines, two lines being for power supply and one line being for data exchange.

The advantage of the present invention will become apparent from the following description of several embodiments with reference to the accompanying drawings, in which:
Figure 1 is a schematic view of a preferred embodiment of the invention;
Figure 2 is a schematic cross section of the connector par of a preferred embodiment of the invention;
Figure 3 is a schematic cross section of a mobile phone showing the use of the invention; and
Figures 4a to 4c show different embodiments of the connector part of the invention.

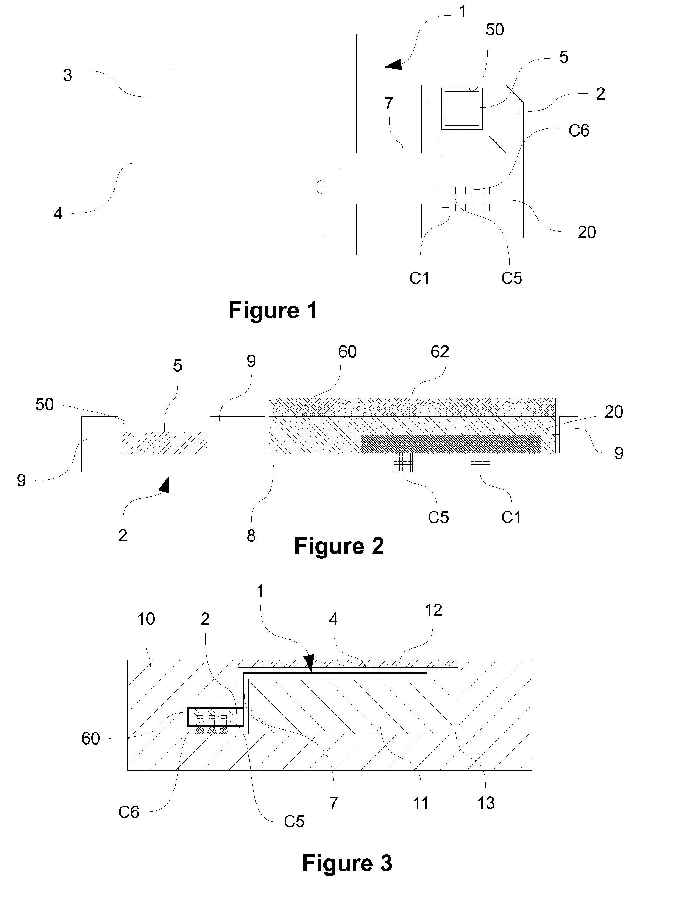

As indicated, the invention is a contactless adaptor device as shown on figure 1. The adaptor device 1 is formed by a Printed Circuit Board (PCB), comprising a main part 4 and a connector part 2 linked with a flexible bridge 7. The PCB is a flexible one made of a thin insulating substrate layer supporting two conductive metallization on each side, the metallization being connected from one to the other by via crossing the insulating layer.

The connector part 2 supports on both sides a smartcard connector according to ISO 7816. The electrical contact between the connector of each side is made in such a way that the insertion of this connector part between a smartcard and the reader allows the communication between the card and the reader. As well known, a smartcard connector having a plurality of contacts areas called C₁ to C8 in ISO 7816 standard. For the invention, only C₁, C5 and C6 are used but the other contact area maintained for the communication for the smartcard with its reader.

The connector part 2 has the dimensions of a second generation form factor (2FF) of SIM card and is adapted to receive a third generation form factor (3FF) SIM card into a compartment 20 having the dimensions of a 3FF SIM card. As well known in the art, the 2FF SIM card corresponds to the mini-SIM or ID-ooo format of SIM card and the 3FF SIM card corresponds to the micro-SIM or mini UICC as defined in ETSI TS 102 221.

2FF and 3FF SIM card have the same thickness, so when a 3FF smartcard 60 is in the compartment 20, the thickness of the connector part 2 is increase due to the smartcard connector thickness. To avoid this thickness increase, a solution is to use a thinner 3FF smartcard 60 or to provide the 3FF smartcard with a removable thickness compensation layer 62 corresponding to the smartcard connector thickness. By this means, the thickness of the connector part 2 when a 3FF smartcard is in the compartment 20 should be the same as a 2FF smartcard, as shown on figure 2.

As the compartment 20 is smaller than the connector part 2 due to the size difference between 2FF and 3FF, an Integrated Circuit 5 (IC), with the thickness of the connector part 2, is mounted adjacent to the compartment 20. The IC 5 is preferably a thin IC, for example with a thickness around 150µm or thinner. The IC can be glued in another compartment 50 on the connector part 2, for preventing any additional bonding.

One of the functions of the IC 5 could be to translate messages between a wireless standard, like ISO 14443, and a Single Wire protocol (SWP), like ETSI TS 102 613. To this aim, the IC 5 comprises two pads connected to the antenna 3 and three pads respectively connected to C₁, C₅ and C6. C₁ and C₅ correspond to the contact areas of power supply. When the device is inserted into the mobile phone and when the phone is power on, C₁ and C₅ are supplied in energy by the phone battery. This power supply is used for supplying the IC 5 if the field level of the antenna is not sufficient for supply all the circuit. If the mobile phone is power off, the IC 5 may be completely supplied by the antenna and can also supply the smartcard. C6 is dedicated for SWP in which the IC 5 is the master sending message by voltage modulation, and in which the smartcard is the slave sending by current modulation the translation between ISO 14443 and ETSI TS 102 613.

The IC 5 could also translate messages of others protocols like Universal Serial Bus (USB) and others wireless standards like Bluetooth or Wi-Fi.

The main part 4 thickness is about a hundred µm. On the flexible main part 4, there is a flexible electromagnetic antenna 3 in conformity with ISO 14443. Such an antenna 3 is constituted of turns made in one conductive layer, the opposite layer being used for the wire crossing. The location of the IC 5 on the connector part 2 prevents the main part 4 of the PCB to be bounding by the IC 5 and allow an optimal flexibility and thinness of said main part 4 of the PCB.

The main part 4 and the connector part 2 are connected by a flexible bridge 7. The wires of the electromagnetic antenna 3 are passing through said flexible bridge 7.

The connector part 2 could be formed by a bottom layer 8 corresponding to the same PCB than the flexible bridge 7 and the main part 4. The 2FF thickness of the connector part 2 and the compartments 20 and 50 are obtained by additional walls 9 fixed on the same side of the bottom layer 8, as shown on figure 2. These additional walls could be molded on the bottom layer 8. In an alternative manner the molding can also be made over the IC 5.

Now on figure 3, it can be seen how the invention is used. A mobile phone 10 always comprises a removable battery placed into a cavity closed by a hood 12. Said battery being connected to the handset by means of elastic contact 13 that ensure a small pressure on the battery that ensure the contact with the battery which comprise a play of few hundreds of µm to be easily placed or removed into the cavity.

Commonly, this cavity also comprises another cavity beside (or sometimes under) the battery for receiving a SIM card. The card reader part of the handset communicate with the card by means of contacts C₅, C₁ which are also elastic for insuring the placement of the card and a good electric contact with the contact area of the card.

For placing the invention into the handset, in a first step, the battery 11 and the SIM card are removed. Then, in a second step, the contact part 2 of the adaptor device 1, with a 3FF smartcard 60, is placed into the card place. In a third step, the bridge 7 is folded for placing the battery 11 into the cavity and folded again for closing the hood 12. The antenna 3 is functionally placed between the hood 12 and the battery 11 in such a way to minimize the radiation generated by the handset circuits.

The use of a flexible and thin bridge 7 and main part 4 enable such a placement of the adaptor device into the few hundreds of µm of place into the battery case. As an example, the bridge 7 and the main part 4 must have a thickness lower than 500 µm.

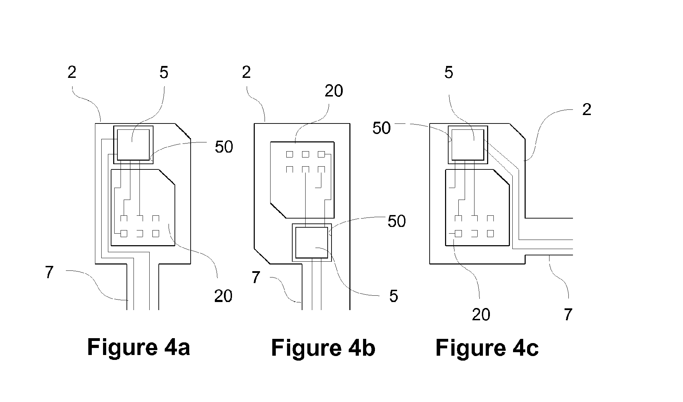

In addition, SIM cards are not inserted in the same manner, depending of the phone. So for overcoming this problem the solution is to provide different geometrical configuration of the connector part 2 as shown on figures 4a, 4b and 4c. So it is possible to sell several kinds of adaptors each adaptor corresponding to a plurality of handsets.

Thus, the present invention allows easily adapting a thin contactless adaptor device for replacing the NFC interface with less mechanical stress on the battery and on the cover of a mobile device.

## Claims

1. A contactless adaptor device (1) comprising a printed circuit board having two opposite sides which supports:
- a main part (4) having a flexible electromagnetic antenna (3) constituted of conductive turns printed on a conductive layer,
- a connector part (2) having a smartcard connector according ISO 7816 standard, said smartcard connector having a plurality of contacts areas (C₁, C₅, C6), said smartcard connector being printed on the two sides of the printed circuit board and having an electric contact between the two sides of the printed circuit board, said connector part (2) having the dimensions of a second generation form factor SIM card,
wherein said connector part (2) presents a compartment (20) having the dimensions to receive a SIM card (60) having a third generation form factor and where an integrated circuit (5), having a plurality of pads for connecting, on one hand, the antenna turns (3), and on the other hand, several contacts areas (C₁, C₅, C6) of the connector part (2), is integrated within the connector part (2), adjacent to said compartment (20).

2. The device of claim 1, wherein, when the third generation form factor smartcard (60) is placed in the compartment (20), the thickness of the smartcard connector part (2) is the thickness of a second generation SIM card.

3. The device of claim 2, wherein the third generation form factor SIM card (60) is thinner than a third generation form factor SIM card.

4. The device of claim 1, wherein the integrate circuit (5) is glued in a compartment (50) on the connector part (2).

5. The device of claim 1, wherein the several contacts areas (C1, C₅, C6) of the smartcard comprise power supply contacts (C₁, C₅) for receiving energy or for providing energy to the smartcard.

6. The device of claim 1, wherein one of the functions of the integrated circuit (5) is to translate messages between a wireless standard and a single wire protocol standard.

7. The device of claim 6, wherein the wireless standard is ISO 14443 standard.

8. The device of claim 6, wherein the single wire protocol standard is ETSI TS 102 613.

9. The device of claim 1, wherein the flexible printed circuit board is bendable and foldable to fit into a mobile phone having its connector part (2) inserted in place of a SIM card.

10. The device of claim 1, wherein the plurality of pads for connecting the smartcard connector comprises three electrical lines, two lines being for power supply and one line being for data exchange.
